# NOUVEAU FASCICULE DE BREVET EUROPEEN

(11) **EP 0 529 722 B2**
(45) Date de publication et mention de la décision concernant l'opposition: **28.11.2001**
(45) Mention de la délivrance du brevet: 10.07.1996
(21) Numéro de dépôt: 92202557.2
(22) Date de dépôt: 21.08.1992
(51) Int. Cl.: C01B 15/013, B01D 53/18

(54) **Procédé pour l'obtention de solutions aqueuses épurées de peroxyde d'hydrogène**
Verfahren zur Gewinnung von gereinigten wässrigen Wasserstoffperoxidlösungen
Process for obtaining purified aqueous solutions of hydrogen peroxide

(30) Priorité: 27.08.1991 BE 9100787
(43) Date de publication de la demande: 03.03.1993
(73) Titulaire: SOLVAY INTEROX (Société Anonyme), B-1050 Bruxelles (BE)
(72) Inventeur: Signorini, Lido, B-1050 Bruxelles (BE); Glinos, Konstantin, B-1200 Bruxelles (BE)
(74) Mandataire: Vande Gucht, Anne

(56) Documents cités:
- CH-A- 362 060
- GB-A- 452 632
- US-A- 3 152 052

## Description

L'invention concerne un procédé pour l'obtention de solutions aqueuses concentrées de peroxyde d'hydrogène à faibles teneurs en impuretés.

On connaît un procédé (brevet US-3152052 de FMC Corporation) de concentration et d'épuration de la solution aqueuse de peroxyde d'hydrogène produite dans un procédé aux alkylanthraquinones selon lequel on vaporise une majeure partie de la solution aqueuse de peroxyde d'hydrogène contenant des impuretés organiques, on soutire continuellement du mélange à l'ébullition dans l'évaporateur un résidu concentré en impuretés, on soumet la vapeur à distillation dans une première colonne à distiller du sommet de laquelle on recueille de la vapeur d'eau et du pied de laquelle on recueille une solution aqueuse épurée de peroxyde d'hydrogène, on traite le résidu concentré en impuretés dans une deuxième colonne où l'on réalise un stripping du résidu par la vapeur produite en tête de la première colonne et on recueille en pied de la deuxième colonne un résidu final contenant la majorité des impuretés et qui est ensuite éliminé.

Ce procédé connu présente cependant l'inconvénient de donner lieu à des solutions dont les concentrations simultanées en H₂O₂ et en matières organiques sont telles qu'elles se situent parfois dans la zone de danger d'explosion ou sont fort proches de cette zone. Par ailleurs, le traitement des solutions aqueuses de peroxyde d'hydrogène dans deux colonnes à distiller successives est souvent la cause d'une perte non négligeable d'une partie substantielle de peroxyde d'hydrogène par décomposition en oxygène et en eau.

La demande de brevet CH-A-362060 divulgue un procédé pour épurer et distiller le peroxyde d'hydrogène dans un appareillage comportant deux colonnes, la première colonne étant munie d'un garnissage en laine de verre et de plateaux (page 2, lignes 6-12) et la deuxième étant une colonne de fractionnement disposée au-dessus de la première colonne selon un axe différent et parallèle à celle-ci. De l'eau pure est injectée au sommet de la colonne de fractionnement (page 2, lignes 24-29). Au sommet de la première colonne, on injecte aussi de l'eau pure ou une solution de peroxyde d'hydrogène ne contenant pas ou très peu de carbone (page 2, lignes 12-15 et 89-108).

La demande de brevet GB-A-452632 divulgue un procédé de lavage d'un mélange de gaz par un liquide en vue d'épurer le mélange par absorption dans le liquide d'un ou de plusieurs des gaz constituant le mélange.

En raison de la diminution de volume du mélange de gaz à mesure que l'absorption progresse, la vitesse de passage du mélange de gaz dans l'absorbeur a tendance à décroître. Afin de combattre cette tendance et de maintenir une vitesse constante dans l'absorbeur, on diminue la section de celui-ci dans le sens de l'écoulement du mélange de gaz.

L'invention vise à remédier aux inconvénients des procédés connus en fournissant un procédé qui produise une solution aqueuse concentrée de peroxyde d'hydrogène épurée en matières organiques et inorganiques qui n'implique pas de concentrations dangereuses de peroxyde d'hydrogène et de matières organiques tout en évitant les pertes en peroxyde par décomposition.

A cet effet, l'invention concerne un procédé pour l'obtention de solutions aqueuses épurées de peroxyde d'hydrogène fournissant des solutions aqueuses concentrées de peroxyde d'hydrogène à teneur réduite en impuretés selon lequel on évapore une partie majeure d'une solution aqueuse brute de peroxyde d'hydrogène contenant des impuretés organiques et/ou inorganiques pour obtenir une phase vapeur formée d'un mélange d'eau et de peroxyde d'hydrogène qui contient aussi les impuretés volatiles et celles qui ont été entraînées avec ladite phase vapeur et selon lequel on rectifie cette phase vapeur pour produire une solution aqueuse de peroxyde d'hydrogène appauvrie en impuretés. Selon l'invention, on alimente ladite phase vapeur en pied d'une colonne à distiller munie dans sa partie inférieure d'une zone de lavage de la phase vapeur par un faible débit de liquide qui reflue dans le bas de la colonne et qui a la même composition que la solution aqueuse de peroxyde d'hydrogène épurée constituant le produit quittant la colonne, on soutire latéralement ce produit épuré à une hauteur de colonne telle que le soutirage s'opère au-dessus de la zone de lavage de ladite phase vapeur et on recueille en bas de colonne un résidu constitué par le faible débit de liquide de lavage qui contient la majorité des impuretés. Selon l'invention, la zone de lavage de la colonne à distiller présente un diamètre de colonne supérieur au diamètre de la zone de rectification.

Le procédé selon l'invention convient bien pour épurer les solutions aqueuses brutes de peroxyde d'hydrogène obtenues selon le procédé aux alkylanthraquinones.

Par procédé aux alkylanthraquinones on entend désigner un procédé de production d'une solution aqueuse concentrée de peroxyde d'hydrogène consistant à hydrogéner une solution de travail organique d'au moins une alkylanthraquinone et/ou d'au moins une tétrahydroalkylanthraquinone pour produire une ou plusieurs anthrahydroquinones et/ou tétrahydroanthrahydroquinones alkylées. La solution de travail contenant la solution de (tétrahydro)anthrahydroquinones alkylées est ensuite soumise à oxydation au moyen d'oxygène, d'air ou d'air enrichi en oxygène pour fournir du peroxyde d'hydrogène et reformer les alkylanthraquinones et/ou tétrahydroanthraquinones alkylées. Le peroxyde d'hydrogène formé est ensuite séparé de la solution organique de travail au moyen d'une étape d'extraction par l'eau, le peroxyde d'hydrogène étant récupéré dans la phase aqueuse. La solution organique de travail contenant les (tétrahydro)alkyianthraquinones est ensuite recyclée à l'étape d'hydrogénation afin de recommencer le cycle de production de peroxyde d'hydrogène.

Par alkylanthraquinones, on entend désigner les 9,10-anthraquinones substituées en position 1,2 ou 3 par au moins une chaîne latérale alkyle de type aliphatique linéaire ou ramifiée comprenant au moins un atome de carbone. Habituellement, ces chaînes alkyles comportent moins de 9 atomes de carbone et, de préférence, moins de 6 atomes de carbone. Des exemples de telles alkylanthraquinones sont la 2-éthylanthraquinone, la 2-isopropylanthraquinone, les 2-sec- et 2-tert-butylanthraquinones, les 1,3-, 2,3-, 1,4- et 2,7-diméthylanthraquinones, les 2-iso- et 2-tert-amylanthraquinones et les mélanges de ces quinones.

Par anthrahydroquinones alkylées, on entend désigner les 9,10-hydroquinones correspondantes aux 9,10-alkylanthraquinones explicitées ci-dessus.

Le procédé selon l'invention convient aussi pour épurer les solutions aqueuses brutes de peroxyde d'hydrogène qui sont produites par d'autres techniques connues. Il peut, par exemple, être utilisé pour épurer des solutions aqueuses d'H₂O₂ provenant d'une synthèse directe à partir d'hydrogène et d'oxygène. Il peut aussi être appliqué à l'épuration de solutions d'H₂O₂ obtenues par un procédé électrolytique.

Le procédé selon l'invention a pour objet de fournir des solutions aqueuses concentrées en peroxyde d'hydrogène à teneur réduite en impuretés. Il est bien adapté pour l'obtention de solutions aqueuse à teneurs réduites en matières organiques, c'est-à-dire contenant moins de 60 mg/kg (ppm) de matières organiques et, de préférence, moins de 30 mg/kg (ppm). Le procédé convient bien aussi pour réduire la teneur des impuretés inorganiques dans les solutions aqueuses de peroxyde d'hydrogène. Il est par exemple possible de l'utiliser pour réduire la teneur des matières inorganiques à une valeur comparable à celle des matières organiques ou même dans certains cas à des valeurs inférieures à celle des matières organiques.

Généralement, la solution aqueuse de peroxyde d'hydrogène à épurer peut encore contenir une quantité non négligeable d'impuretés organiques telles que des produits d'oxydation des quinones et des solvants organiques. La quantité d'impuretés organiques exprimée sous forme de carbone organique total (TOC) dans cette solution aqueuse de peroxyde d'hydrogène est souvent supérieure à 150 mg/kg (ppm). Elle est par ailleurs généralement inférieure à 700 mg/kg (ppm). Quant à la teneur de cette solution en impuretés inorganiques, elle est généralement comprise entre 100 et 500 mg/kg (ppm).

Le procédé selon l'invention est bien adapté pour épurer des solutions aqueuses brutes de peroxyde d'hydrogène dont la concentration en H₂O₂ est supérieure à 20 % en poids et, le plus souvent, supérieure à 30 %. Il convient également bien pour l'épuration de solutions aqueuses brutes de peroxyde d'hydrogène dont la concentration en H₂O₂ ne dépasse pas 60 % en poids et, le plus souvent 50 %.

Les solutions aqueuses épurées de peroxyde d'hydrogène produites au moyen du procédé selon l'invention présentent généralement une concentration en H₂O₂ supérieure à 50 % en poids et, le plus souvent, supérieure à 60 %. De même, ces solutions épurées contiennent généralement moins de 80 % en poids de H₂O₂ et, le plus souvent, moins de 75 %.

Selon le procédé conforme à l'invention, après évaporation d'une partie majeure de la solution brute de peroxyde d'hydrogène contenant les impuretés, on obtient une phase vapeur constituée d'un mélange d'eau et d'H₂O₂ contenant encore une certaine quantité d'impuretés volatiles et d'impuretés entraînées avec la phase vapeur et un liquide résiduaire concentré en impuretés organiques et inorganiques. La phase vapeur obtenue représente au moins 70 % et le plus souvent environ 80 à 90 % de la quantité totale d'H₂O₂ présente dans la solution à évaporer. La quantité d'impuretés organiques dans la phase vapeur formée est généralement supérieure à 50 mg/kg (ppm) et inférieure à 300 mg/kg (ppm) exprimée en carbone organique total (TOC) et, le plus souvent, supérieure à 100 mg/kg (ppm) et inférieure à 200 mg/kg (ppm). La quantité d'impuretés minérales entraînées avec la phase vapeur est habituellement d'environ 30 à environ 200 mg/kg (ppm).

Entre l'évaporateur de la solution brute de peroxyde d'hydrogène à épurer et la colonne à distiller, on trouve généralement un séparateur ayant pour but d'éliminer de la phase vapeur servant à alimenter la colonne à distiller le liquide qui n'a pas été évaporé.

Selon l'invention, on rectifie la phase vapeur produite dans l'évaporateur de la solution aqueuse de peroxyde d'hydrogène contenant les impuretés dans une colonne à distiller fonctionnant comme une colonne de concentration et munie dans sa partie inférieure d'un certain nombre de plateaux de lavage de la phase vapeur introduite. Ces plateaux ont pour fonction de réaliser un lavage de la phase vapeur au moyen d'un faible débit de liquide refluant dans la colonne afin de débarrasser la phase vapeur des impuretés organiques et inorganiques qu'elle contient. Selon l'invention, le liquide refluant dans la colonne et servant à layer la phase vapeur a la même composition que le soutirage latéral (solution aqueuse de peroxyde d'hydrogène épurée constituant le produit quittant la colonne). Son débit, qui est aussi le débit de résidu recueilli en pied de colonne, est tel qu'il contient habituellement environ 5 % en poids du débit d'H₂O₂ présent dans l'alimentation (solution aqueuse brute à épurer entrant dans l'unité de distillation).

La partie de la colonne à distiller conforme au procédé selon l'invention située au-dessus de la zone de lavage est généralement appelée zone de rectification et a pour but de concentrer la solution de peroxyde d'hydrogène. Dans cette zone, on sépare un distillat contenant la majeure partie des impuretés volatiles et s'échappant en tête de colonne d'avec un soutirage latéral pratiqué à la base de cette zone de rectification et constituant la production de peroxyde d'hydrogène aqueux concentré et épuré. On peut, de manière préférée faire fonctionner cette colonne à distiller sous vide partiel. En général, la pression est inférieure à 100 kPa. Une pression d'environ 5 à 5,5 kPa convient généralement bien. La zone de rectification de la colonne est remplie d'un nombre approprié de dispositifs de fractionnement. Ceux-ci peuvent être choisis parmi les divers dispositifs de fractionnement connus en soi dans la technologie des colonnes à distiller comme, par exemple, les plateaux perforés, les plateaux à soupapes, les plateaux à calottes ("bubble caps") et les garnissages divers tels que, par exemple, les anneaux Raschig, les anneaux Pall et les matelas tissés. Les plateaux perforés et les garnissages sont préférés.

Un reflux doit être assuré au sommet de la zone de rectification de manière à obtenir du liquide sur tous les dispositifs de fractionnement. Ce reflux peut être réalisé par condensation des vapeurs s'échappant au sommet de la colonne et recyclage d'une partie du liquide formé sur le premier dispositif de fractionnement. Il peut aussi, de manière préférée, être constitué d'un appoint d'eau déminéralisée, de façon à ne pas recirculer les impuretés volatiles présentes dans la vapeur.

Il convient aussi pour se conformer au procédé de l'invention que le soutirage latéral de la solution de peroxyde d'hydrogène épurée de la colonne à distiller se fasse à une hauteur de colonne telle que ce soutirage s'opère au-dessus de la zone de lavage de la phase vapeur. On peut par exemple soutirer la solution d'H₂O₂ épurée à un endroit situé à quelques centimètres au-dessus du plateau le plus élevé de la zone de lavage de la phase vapeur. Dans une variante préférée, on peut soutirer à un niveau situé entre le plateau supérieur de la zone de lavage de la phase vapeur et le dispositif de fractionnement inférieur de la zone de rectification de la colonne, par exemple le plateau de fractionnement inférieur.

Conformément à l'invention, on recueille en bas de la colonne à distiller un résidu formé par le liquide de lavage. Ce résidu constitue la purge quittant l'unité de distillation. Celle-ci présente une teneur en H₂O₂ d'environ 70 % en poids correspondant à environ 5 % en poids de la quantité totale de peroxyde d'hydrogène contenue dans l'alimentation entrant dans la colonne à distiller et contient la majeure partie des impuretés. La quantité d'impuretés dans la purge est généralement supérieure à 500 et parfois supérieure à 1000 mg/kg (ppm) de matières organiques et/ou inorganiques.

La colonne à distiller conforme au procédé selon l'invention présente dans sa partie inférieure une zone de lavage de l'alimentation en phase vapeur à épurer qui est injectée à la base de la colonne. Cette zone de lavage peut être réalisée selon toute technique adéquate et bien connue par elle-même pour réaliser un lavage d'un gaz par un liquide. La technique de lavage de la phase vapeur par un liquide refluant sur des plateaux disposés les uns au-dessus des autres s'est avérée bien adaptée à l'épuration de la phase vapeur de peroxyde d'hydrogène contenant des impuretés organiques et inorganiques.

De préférence, les plateaux de lavage disposés dans le bas de la colonne à distiller seront choisis du type à calottes ("bubble-caps") pour éviter le phénomène de pleurage ("weeping") du liquide d'un plateau à l'autre et minimiser l'entraînement vers le plateau supérieur de gouttelettes de liquide par la vapeur ascensionnelle.

La zone de lavage de la colonne à distiller selon le procédé conforme à l'invention comporte au moins un plateau de lavage. Souvent, on n'utilise pas plus de 4 plateaux. Dans les cas particuliers où la solution aqueuse de peroxyde d'hydrogène à épurer contient peu d'impuretés, comme par exemple des solutions contenant moins de 80 mg/kg (ppm) de matières organiques, une zone de lavage ne comportant que deux plateaux ou même un seul plateau peut parfois s'avérer suffisante. Le plus souvent, cette zone de lavage comporte moins de 5 plateaux, c'est-à-dire habituellement 3 ou 4 plateaux.

Selon l'invention, on réalise la zone de lavage dans le bas de la colonne avec un diamètre supérieur à celui de la zone de rectification surmontant la zone de lavage. Le rapport entre le diamètre de la zone de lavage et le diamètre de la zone de rectification est généralement supérieur à 1 et souvent choisi égal à environ 1,3 ou plus. Habituellement, ce rapport ne dépasse pas environ 1,8. Un rapport d'environ 1,5 a donné d'excellents résultats.

Selon une variante au procédé selon l'invention, on fait précéder l'opération d'évaporation de la solution aqueuse brute de peroxyde d'hydrogène contenant les impuretés par une ou plusieurs étapes de lavage de cette solution au moyen d'un solvant organique non miscible à l'eau. Le solvant organique peut être un solvant polaire tel que, par exemple, un alcool ou un mélange d'alcools, un amide ou un alkylphosphate ou un solvant non polaire comme, par exemple un hydrocarbure ou un mélange d'hydrocarbures aliphatiques et/ou aromatiques. Il est avantageux de choisir pour solvant un mélange d'au moins un solvant polaire avec au moins un solvant non polaire, en proportions diverses qui dépendent de la nature particulière de la solution à traiter, en vue de pouvoir extraire les impuretés organiques. On peut, par exemple, choisir un mélange de solvants contenant une proportion d'environ 50 % en poids d'un ou plusieurs solvants polaires tel que le diisobutylcarbinol et d'environ 50 % d'un ou plusieurs solvants non polaires, tel que le solvant commercialisé sous la marque déposée SOLVESSO.

Dans une autre variante au procédé selon l'invention, qui est préférée, on fait subir au résidu constitué par le faible débit de liquide de lavage quittant le pied de la colonne à distiller un traitement d'épuration destiné à permettre le recyclage et la récupération des produits qu'il contient, en particulier du peroxyde d'hydrogène.

Selon l'invention, la colonne à distiller pour réaliser le procédé d'épuration conforme à l'invention comporte une partie inférieure constituant la zone de lavage de la phase vapeur dont le diamètre est d'environ 1,3 à environ 1,8 fois plus grand que la zone de rectification de la colonne et comporte des plateaux laveurs percés d'orifices munis de calottes ("bubble-caps"), la base de cette colonne étant munie d'un dispositif d'entrée et de répartition de la phase vapeur d'alimentation à épurer provenant de l'évaporateur, le sommet de la zone de lavage comportant un dispositif de soutirage latéral de la solution aqueuse de peroxyde d'hydrogène épurée produite et le pied de colonne étant muni d'un système destiné à recueillir le résidu constitué par le faible débit de liquide de lavage enrichi en impuretés en vue de son élimination de l'unité de distillation.

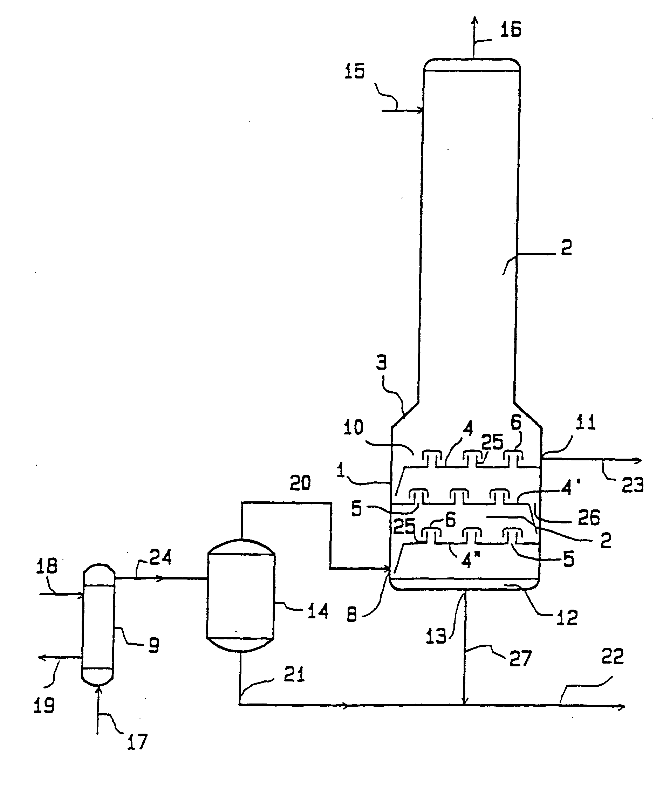

La colonne à distiller est par ailleurs explicitée avec plus de détails dans la description qui suit et qui se réfère à la figure unique du dessin annexé donnant une représentation schématique d'une forme de réalisation préférée de la colonne à distiller.

Cette colonne à distiller s'intègre dans une unité de distillation comprenant trois dispositifs, à savoir, l'évaporateur 9, le séparateur 14 et la colonne à distiller proprement dite 3. La solution aqueuse de peroxyde d'hydrogène à épurer provenant de l'unité de fabrication de peroxyde d'hydrogène et plus particulièrement de l'unité d'extraction (cas d'un procédé aux alkylanthraquinones) et ayant éventuellement subi au moins un lavage préalable au moyen d'un mélange de solvants, de préférence un mélange de solvants polaires et non polaires entre dans l'unité de distillation par la conduite 17 et pénètre dans l'évaporateur 9 alimenté en vapeur de chauffage par les conduites 18 d'entrée de vapeur et 19 de sortie de vapeur. Le mélange de phase vapeur et de liquide produit s'échappe de l'évaporateur par la conduite 24 et entre ensuite dans le séparateur 14 où il est séparé en un flux de phase vapeur 20 contenant de l'eau, du peroxyde d'hydrogène et des impuretés et un flux de liquide 21 qui quitte l'unité de distillation.

Le flux 20 d'alimentation en phase vapeur à épurer est introduit dans la zone de lavage 1 constituée par la partie inférieure d'une colonne à distiller 3 au moyen d'un dispositif d'introduction 8. La colonne à distiller 3 est aussi alimentée à son sommet par un courant d'eau pure 15 servant à créer un débit de reflux liquide traversant la colonne à contre-courant. de la vapeur. Celle-ci s'échappe au sommet de la colonne par le conduit 16 et quitte l'unité de distillation. La zone de lavage 1 de la colonne est réalisée avec un diamètre environ 1,5 fois supérieur à celui de la zone de rectification 2. A la partie supérieure de la zone de lavage 1, on soutire latéralement en 11 par la conduite 23 un débit de produit épuré qui quitte également l'unité de distillation.

La zone de lavage 1 de la colonne est munie de trois plateaux laveurs 4,4' et 4". Les orifices 5 de ces plateaux sont munis de calottes ("bubble-caps") 6 coiffant des tuyaux courts 25 dont la fonction est de retenir du liquide sur le plateau et de ménager un passage pour la phase vapeur ascensionnelle. Les plateaux 4, 4' et 4" présentent sur une partie de leur circonférence des lumières 26 destinées à l'écoulement du liquide de lavage vers le plateau inférieur. Ces lumières sont disposées sur chaque plateau à un endroit diamétralement opposé à celui du plateau supérieur de façon à obliger le liquide à traverser la totalité de la surface de chaque plateau de lavage. Le plateau de lavage supérieur 4 est disposé sous le dispositif de soutirage latéral 11. De par son origine, le produit liquide soutiré par la canalisation 23 a donc la même composition que le liquide de lavage refluant sur le plateau 4.

A la base de la zone de lavage élargie 1 de la colonne, on trouve un dispositif 12 destiné à recueillir le résidu constitué par le faible débit de lavage chargé en impuretés qui s'écoule par l'orifice 13 dans la canalisation 27 et est éliminé de l'unité de distillation par la canalisation 22 en même temps que le liquide quittant le séparateur 14 par la voie 21. La présence permanente d'une quantité de liquide sur le plateau supérieur 4 de la zone de lavage 1 peut se régler en asservissant le pilotage d'une vanne placée sur le flux 23 de soutirage latéral à la mesure du débit de résidu qui s'écoute en pied de colonne 13.

## Revendications

1. Procédé pour l'obtention de solutions aqueuses épurées de peroxyde d'hydrogène fournissant des solutions aqueuses concentrées de peroxyde d'hydrogène à teneur réduite en impuretés selon lequel on évapore une partie majeure d'une solution aqueuse brute de peroxyde d'hydrogène contenant des impuretés organiques et/ou inorganiques pour obtenir une phase vapeur formée d'un mélange d'eau et de peroxyde d'hydrogène qui contient aussi les impuretés volatiles et celles qui ont été entraînées avec ladite phase vapeur, selon lequel on rectifie cette phase vapeur pour produire une solution aqueuse de peroxyde d'hydrogène appauvrie en impuretés, on alimente ladite phase vapeur en pied d'une colonne à distiller munie dans sa partie inférieure d'une zone de lavage de la phase vapeur par un faible débit de liquide qui reflue dans le bas de la colonne et qui a la même composition que la solution aqueuse de peroxyde d'hydrogène épurée constituant le produit quittant la colonne, on soutire latéralement ce produit épuré à une hauteur de colonne telle que le soutirage s'opère au-dessus de la zone de lavage de ladite phase vapeur et on recueille en bas de colonne un résidu constitué par le faible débit de liquide de lavage qui contient la majorité des impuretés, et selon lequel la zone de lavage de la colonne à distiller présente un diamètre de colonne supérieur au diamètre de la zone de rectification.

2. Procédé selon la revendication 1, **caractérisé en ce que** la colonne à distiller comporte de 1 à 4 plateaux dans la zone de lavage de la phase vapeur.

3. Procédé selon la revendication 2, **caractérisé en ce que** la colonne à distiller comporte 1 ou 2 plateaux dans la zone de lavage de la phase vapeur.

4. Procédé selon la revendication 2, **caractérisé en ce que** la colonne à distiller comporte 3 ou 4 plateaux dans la zone de lavage de la phase vapeur.

5. Procédé selon l'une quelconque des revendications 1 à 4, **caractérisé en ce que** les plateaux de lavage de la colonne à distiller sont du type à calottes.

6. Procédé selon l'une quelconque des revendications 1 à 5, **caractérisé en ce que** le rapport du diamètre de la zone de lavage à celui de la zone de rectification est compris entre 1,3 et 1,8.

7. Procédé selon la revendication 6, **caractérisé en ce que** le rapport du diamètre de la zone de lavage à celui de la zone de rectification est égal à 1,5.

8. Procédé selon l'une quelconque des revendications 1 à 7, **caractérisé en ce que** l'on fait précéder l'opération d'évaporation de la solution aqueuse brute de peroxyde d'hydrogène à épurer par au moins une étape de lavage de cette solution au moyen d'un solvant organique.

9. Procédé selon l'une quelconque des revendications 1 à 8, **caractérisé en ce que** l'on fait subir au liquide de lavage quittant le pied de la colonne à distiller un traitement d'épuration destiné à permettre le recyclage et la récupération des produits qu'il contient.

10. Application du procédé selon l'une quelconque des revendications 1 à 9 à l'épuration des solutions aqueuses brutes de peroxyde d'hydrogène obtenues par le procédé aux alkylanthraquinones.

## Claims

1. Process for obtaining purified aqueous hydrogen peroxide solutions, providing concentrated aqueous hydrogen peroxide solutions with a reduced content of impurities, according to which a major part of a crude aqueous hydrogen peroxide solution containing organic and/or inorganic impurities is evaporated to obtain a vapour phase consisting of a mixture of water and hydrogen peroxide which also contains the volatile impurities and those which have been entrained with the said vapour phase, according to which this vapour phase is rectified to produce an aqueous hydrogen peroxide solution depleted in impurities, the said vapour phase is fed in at the foot of a distillation column provided in its lower part with a washing zone where the vapour phase is washed with a small flow of liquid which refluxes in the bottom of the column and which has the same composition as the purified aqueous hydrogen peroxide solution forming the product leaving the column, this purified product is drawn off at the side at a column height such that the draw-off takes place above said washing zone of said vapour phase and a residue consisting of the small flow of washing liquid, which contains most of the impurities, is collected at the bottom of the column, and according to which the washing zone of the distillation column has a column diameter which is greater than the diameter of the rectification section.

2. Process according to Claim 1, **characterised in that** the distillation column contains from 1 to 4 trays in the vapour phase washing zone.

3. Process according to Claim 2, **characterised in that** the distillation column contains 1 or 2 trays in the vapour phase washing zone.

4. Process according to Claim 2, **characterised in that** the distillation column contains 3 or 4 trays in the vapour phase washing zone.

5. Process according to any one of Claims 1 to 4, **characterised in that** the washing trays of the distillation column are of the bubble-cap type.

6. Process according to any one of Claims 1 to 5, **characterised in that** the ratio of the diameter of the washing zone to that of. the rectification section is between 1.3 and 1.8.

7. Process according to Claim 6, **characterised in that** the ratio of the diameter of the washing zone to that of the rectification section is equal to 1.5.

8. Process according to any one of Claims 1 to 7, **characterised in that** the operation of evaporation of the crude aqueous hydrogen peroxide solution to be purified is preceded by at least one stage of washing of this solution with an organic solvent.

9. Process according to any one of Claims 1 to 8, **characterized in that** the washing liquid leaving the foot of the distillation column is subjected to a purification treatment intended to permit the recycling and the recovery of the products which it contains.

10. Application of the process according to any one of Claims 1 to 9 to the purification of crude aqueous hydrogen peroxide solutions obtained by the alkylanthraquinone process.

## Patentansprüche

1. Verfahren zur Gewinnung von gereinigten wäßrigen Wasserstoffperoxidlösungen, das konzentrierte wäßrige Wasserstoffperoxidlösungen mit vermindertem Gehalt an Verunreinigungen liefert, gemäß dem man einen Hauptteil einer rohen wäßrigen Wasserstoffperoxidlösung, die organische und/oder anorganische Verunreinigungen enthält, verdampft, wobei eine aus einem Gemisch von Wasser und Wasserstoffperoxid gebildete Dampfphase erhalten wird, die auch die flüchtigen Verunreinigungen und diejenigen, die mit besagter Dampfphase mitgeschleppt wurden, enthält, gemäß dem man diese Dampfphase rektifiziert, um eine an Verunreinigungen verarmte wäßrige Wasserstoffperoxidlösung zu erzeugen, man besagte Dampfphase am Fuß einer Destillationskolonne einspeist, die in ihrem unteren Teil mit einer Zone zum Waschen der Dampfphase mittels einer geringen Menge an Flüssigkeit, die in den unteren Teil der Kolonne zurückfließt und welche dieselbe Zusammensetzung wie die gereinigte wäßrige Wasserstoffperoxidlösung, die das die Kolonne verlassende Produkt bildet, aufweist, ausgerüstet ist, man dieses gereinigte Produkt seitlich auf einer solchen Höhe der Kolonne entnimmt, daß die Entnahme oberhalb der Zone zum Waschen der besagten Dampfphase erfolgt, und man im unteren Teil der Kolonne einen Rückstand gewinnt, der aus der geringen Menge der Waschflüssigkeit, die den Hauptteil der Verunreinigungen enthält, gebildet wird, und gemäß dem die Waschzone der Destillationskolonne einen Kolonnendurchmesser aufweist, der größer ist als der Durch-messer der Rektifikationszone.

2. Verfahren gemäß Anspruch 1, **dadurch gekennzeichnet, daß** die Destillationskolonne in der Zone zum Waschen der Dampfphase 1 bis 4 Böden enthält.

3. Verfahren gemäß Anspruch 2, **dadurch gekennzeichnet, daß** die Destillationskolonne in der Zone zum Waschen der Dampfphase 1 oder 2 Böden enthält.

4. Verfahren gemäß Anspruch 2, **dadurch gekennzeichnet, daß** die Destillationskolonne in der Zone zum Waschen der Dampfphase 3 oder 4 Böden enthält.

5. Verfahren gemäß einem der Ansprüche 1 bis 4, **dadurch gekennzeichnet, daß** die Waschböden der Destillationskolonne vom Glockentyp sind.

6. Verfahren gemäß einem der Ansprüche 1 bis 5, **dadurch gekennzeichnet, daß** das Verhältnis des Durchmessers der Waschzone zu demjenigen der Rektifikationszone zwischen 1,3 und 1,8 liegt.

7. Verfahren gemäß Anspruch 6, **dadurch gekennzeichnet, daß** das Verhältnis des Durchmessers der Waschzone zu demjenigen der Rektifikationszone gleich 1,5 ist.

8. Verfahren gemäß einem der Ansprüche 1 bis 7, **dadurch gekennzeichnet, daß** man dem Vorgang des Verdampfens der zu reinigenden rohen wäßrigen Wasserstoffperoxidlösung wenigstens einen Schritt des Waschens dieser Lösung mittels eines organischen Lösungsmittels vorangehen läßt.

9. Verfahren gemäß einem der Ansprüche 1 bis 8, **dadurch gekennzeichnet, daß** man die Waschflüssigkeit, die den Fuß der Destillationskolonne verläßt, einer Reinigungsbehandlung unterzieht, die dazu bestimmt ist, die Rückführung und die Gewinnung der Produkte, die sie enthält, zu ermöglichen.

10. Anwendung des Verfahrens gemäß einem der Ansprüche 1 bis 9 zur Reinigung von rohen wäßrigen Wasserstoffperoxidlösungen, die durch das Alkylanthrachinonverfahren erhalten werden.
